# EUROPEAN PATENT SPECIFICATION

(11) **EP 2 387 263 B1**
(45) Date of publication and mention of the grant of the patent: **15.07.2015**
(21) Application number: 10162727.1
(22) Date of filing: 12.05.2010
(51) Int. Cl.: H04W 12/06, H04L 29/06, G07F 7/10

(54) **Authenticating a mobile device**
Authentisierung eines Mobilgeräts
Authentification d'un appareil mobile

(43) Date of publication of application: 16.11.2011
(73) Proprietor: ThinxNet GmbH, 80469 München (DE)
(72) Inventor: Malek, Moni, 81677 München (DE)
(74) Representative: Dendorfer, Claus

(56) References cited:
- EP-A1- 1 239 687
- WO-A1-2009/141035
- US-A- 5 479 482
- US-A1- 2006 291 455
- US-B1- 6 738 622
- US-B1- 6 957 060

## Description

### FIELD OF THE INVENTION

The present invention relates to the field of telecommunication. More precisely, it relates to authentication and identification of a mobile device in a mobile telecommunication network.

### BACKGROUND OF THE INVENTION

Mobile telecommunication networks, especially Global System for Mobile Communication (GSM) and Universal Mobile Telecommunications System (UMTS) networks, have become ubiquitous.

Mobile devices are known that comprise both a telecommunication module and a location determination module. Such devices may be tracking devices, in which the telecommunication feature is used to transmit the determined location of the tracking device to a location server. In case of emergency devices, the current location is transmitted to a control room upon detection of an emergency event.

When selling tracking or emergency devices in large scale, e.g. to equip vehicles for emergency purposes, the network operators will realize static capacity issues: Millions of SIM cards need to be provisioned in the network, while the dynamic network load is very low, due to the usage profile of tracking and emergency devices.

Today's SIM cards offer many services which are not required in case of tracking or emergency devices. A tracking or emergency device only requires a subscriber specific secret key and an IMSI in the subscriber specific section of a SIM. All other required SIM data are operator specific and thus identical for all mobile devices. Nevertheless, a SIM must be personalized even if only a few data fields need to be set up individually. Personalization takes place in a secure environment. Consequently, personalization costs are a significant part of the total SIM production costs.

US 6,957,060 B1 discloses a method and apparatus for connecting a mobile station to a wireless cellular network without the presence of a SIM card. This is desirable for access to emergency services. In order to authenticate the mobile station in the wireless cellular network, the mobile station has a default IMSI, which authorizes call setup with special conditions. The mobile station has default values for any data which is requested by the network during call setup. The default values comprise default identifying and authentication information, which may be hard-coded in the mobile station. The mobile stations are manufactured without a unique default identity. The network may derive a unique temporarily assigned identity based on the IMEI of the mobile device.

EP 1 239 687 A1 discloses a method for a mobile unit to communicate with a plurality of public land mobile communication networks (PLMNs). The mobile unit comprises an emulator that emulates a subscription identity based on a given IMSI and Ki pair that has been made available to the mobile unit. A plurality of IMSI/Ki value pairs suitable for different PLMNs are stored in a centralized memory deposit that is accessible to the emulator via wireless communication. When the mobile unit determines that there is a need to change the operator in order to avoid roaming, the emulator is provided with a suitable IMSI/Ki pair. The emulator can be realized as an extra circuit in the mobile unit or as software on the SIM.

### OBJECTS AND SUMMARY OF THE INVENTION

It is an object of the present invention to reduce costs by reducing the requirements for SIM personalization or even avoiding SIM personalization entirely. Furthermore, it is an object of some embodiments of the present invention to save resources in the mobile telecommunication network.

The present invention is defined by the independent claims. The dependent claims concern optional features of some embodiments of the invention.

The present invention includes the feature that a mobile device is authenticated at a mobile telecommunication network with a challenge response procedure, which is based on a mobile device authentication key being stored external to a SIM of the mobile device. In some embodiments, the mobile device authentication key is an individual mobile device authentication key.

The mobile device authentication key is not stored on the SIM. Consequently, no unique secret key needs to be stored on the SIM during personalization. This does not exclude the possibility that, in some embodiments, a secret key that is characteristic of a whole group of mobile devices is stored on the SIM.

The applicable standards require that an IMSI is stored on the SIM, wherein the IMSI identifies the mobile subscriber owning the mobile device. However, according to the present invention, the SIM does not contain a uniquely identifying IMSI. Consequently, a plurality of mobile devices may share the same IMSI, which may also be an undefined IMSI. In some embodiments, no personalization of the SIM is necessary, at least insofar as the basic communication functions are concerned.

In some embodiments, the mobile device authentication key is stored in a memory field of an integrated circuit being different from a SIM. The memory field is secured so that its value cannot be read from outside the integrated circuit and thus can only be accessed in the challenge response procedure.

According to the present invention, the authentication procedure is supplemented by a preceding identification procedure. As the IMSI of a mobile device according to the present invention is not necessarily unique, mobile device identity data is used instead of the IMSI to uniquely identify the mobile device.

According to the invention, the mobile telecommunication network identifies the mobile device by requesting the IMSI. Only if the reported IMSI is undefined or is determined to be an identical IMSI assigned to a plurality of mobile devices, a mobile device according to the present invention is assumed. In the latter case, the mobile telecommunication network identifies the mobile device by requesting mobile device identity data. The mobile device retrieves the mobile device identity data and sends it to the mobile telecommunication network.

It depends on the billing requirements of the network operator if the mobile devices require an IMSI or an MSISDN provisioned in the back-end systems of the mobile telecommunication network. Especially for tracking or emergency devices very low usage can be assumed and thus a flat fee arrangement may be advantageous. In this case, network resources can be saved by avoiding to assign an IMSI and/or an MSISDN to such mobile devices.

Even if the activities of a plurality of mobile devices must be assigned to a customer, valuable network resources may be saved by assigning one identical IMSI and/or one identical MSISDN to the plurality of mobile devices. The front-end systems of the mobile telecommunication network access the mobile devices via the mobile device identity data, whereas the back-end systems address them via an identical IMSI and/or MSISDN.

In some embodiments, incoming traffic, i.e. incoming voice calls, SMS, and MMS, is routed to the mobile device by assigning an MSISDN to the mobile device identity data. To avoid storing a large amount of MSISDNs for tracking and emergency devices in the mobile telecommunication network, the MSISDN can be generated from the mobile device identity data 30. In other embodiments, incoming traffic is blocked. This avoids the need for providing individual MSISDNs.

The invention is generally applicable to all kinds of mobile telecommunication networks, either mobile phone cellular networks or satellite phone networks which use any kind of subscriber identity module storing subscriber specific data. The mobile phone cellular networks comprise Second Generation (2G) networks like the Global System for Mobile Communications (GSM), including its supplements General Packet Radio Service (GPRS) and Enhanced Data rates for GSM Evolution (EDGE), or Interim Standard 95 (IS-95, also known under its brand name cdmaOne), furthermore Third Generation (3G) networks like the Universal Mobile Telecommunications System (UMTS), including its supplements High Speed Downlink Packet Access (HSDPA) and High-Speed Uplink Packet Access (HSUPA), or CDMA2000. The satellite phone networks comprise Globalstar, Inmarsat, Iridium, MSAT, SkyTerra, Terrestar, and Thuraya.

The invention can be applied to tracking and emergency devices using all kinds of satellite navigation systems, like the Global Positioning System (GPS), the Globalnaya Navigatsionnaya Sputnikovaya Sistema (GLONASS), the Galileo positioning system (Galileo), or the Compass navigation system (Compass).

A mobile device according to some embodiments of the invention may comprise an integrated circuit. This circuit may be a baseband controller, which integrates the presented authentication and identification procedures at the side of the mobile device. In other embodiments, the integrated circuit may comprise the baseband controller and RF signal processor. In further embodiments, the integrated circuit comprises both telecommunication and location determining functions, thus integrating the baseband controllers for both the telecommunication and the location determining functionality.

Further embodiments of the present invention implement parts of the described method in a mobile device, which may be preferably used for tracking and emergency purposes.

The invention also comprises a machine-readable medium having suitable program instructions to realize the described method, for example, on a general-purpose computer or in a programmable integrated circuit. The machine-readable medium may be any kind of physical or non-physical data carrier like, for example, a computer disk or a CD-ROM or a semiconductor memory or a signal transmitted over a computer network.

### BRIEF DESCRIPTION OF THE DRAWINGS

Further features, objects and advantages of the invention will become apparent from the following detailed description, in connection with the annexed schematic drawings, in which:
Fig. 1 shows a block diagram of a mobile device that can be used in an embodiment of the present invention,
Fig. 2 shows components of an authentication module,
Fig. 3 shows components of a Subscriber Identity Module (SIM),
Fig. 4 shows a block diagram of a conventional mobile device,
Fig. 5 shows various possibilities of combining certain telecommunication control blocks in one integrated circuit,
Fig. 6 shows various possibilities of combining certain telecommunication and location determining control blocks in one integrated circuit,
Fig. 7 and 8 show the message flow between a mobile device and a mobile telecommunication network, wherein Fig. 7 shows a comparative example that is useful for understanding the invention and Fig. 8 shows an embodiment of the present invention, and
Fig. 9 shows the use of mobile device identity data to identify each mobile device in the mobile telecommunication network front-end systems and the use of an identical or undefined IMSI for a plurality of mobile devices in the mobile telecommunication network back-end systems.

### DETAILED DESCRIPTION OF EMBODIMENTS OF THE INVENTION

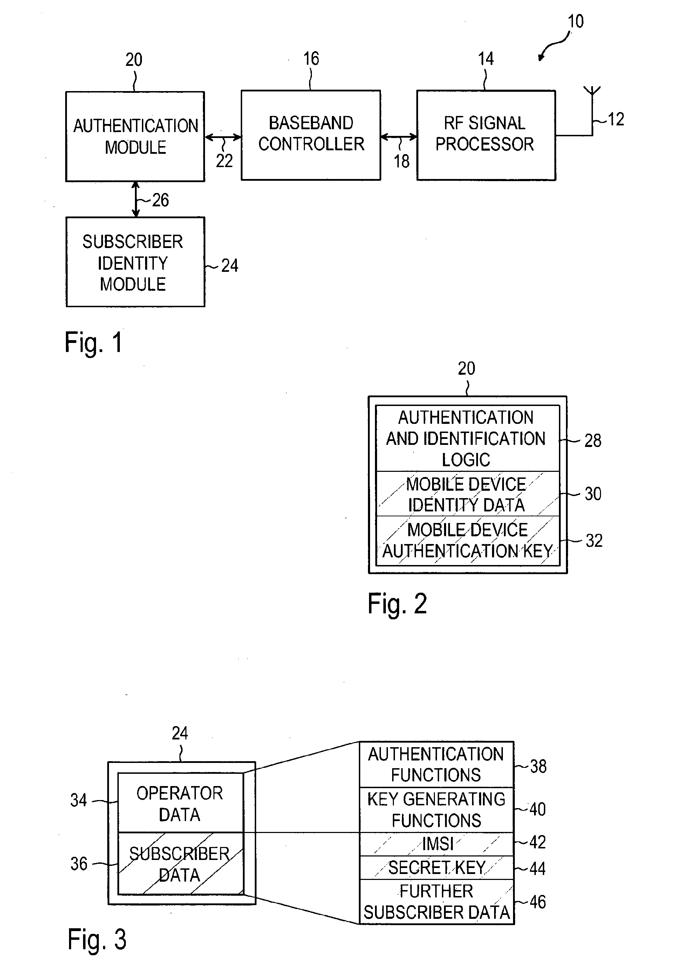

Fig. 1 shows a mobile device 10, comprising an antenna system 12, an RF signal processor 14, a baseband controller 16, an authentication module 20, and a Subscriber Identity Module (SIM) 24. The RF signal processor 14 is controlled by the baseband controller 16 via an interface 18. The authentication module 20 and the baseband controller 16 communicate via interface 22, whereas the authentication module 20 controls the SIM 24 via interface 26.

Fig. 2 shows the details of the authentication module 20. It contains a logic unit 28 to authenticate and/or identify the mobile device at a mobile telecommunication network. Furthermore, the authentication module 20 comprises memory fields to store mobile device identity data 30 and a mobile device authentication key 32.

Fig. 3 shows the details of a SIM 24, comprising network operator specific data 34, which are common for all mobile subscribers of a mobile telecommunication network, and subscriber specific data 36, which need to be set up in a process of personalization individually per mobile subscriber. The operator data 34 comprise authentication functions 38 and key generating functions 40. The SIM 24 is either a SIM for GSM networks or a UICC for UMTS networks, or any subscriber identity module used in other telecommunication standards. In the following, the SIM 24 refers to the subscriber identity module of all telecommunication standards.

In GSM based networks, the authentication functions 38 comprise the authentication algorithm A3, and the key generating functions 40 comprise the ciphering key generating algorithm A8. In UMTS based networks, the USIM authentication functions 38 comprise the algorithms f1 and f2, whereas the USIM key generating functions 40 comprise the algorithms f3, f4, and f5.

The subscriber data 36 of a SIM 24 comprise an IMSI 42 to identify the subscriber, a secret key 44 as input for the authentication and key generation functions, and further subscriber data which are set up individually per mobile subscriber. The secret key 44 is Ki for GSM and K for UMTS.

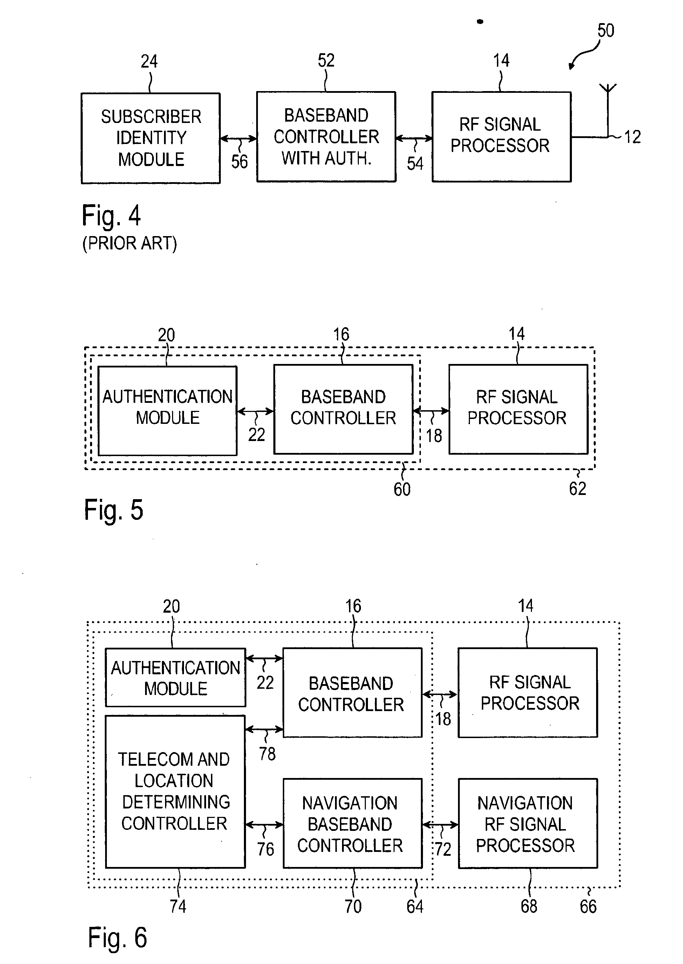

Fig. 4 shows a mobile device 50 according to the prior art, comprising an antenna system 12, an RF signal processor 14, a baseband controller 52, and a Subscriber Identity Module (SIM) 24. The RF signal processor 14 is controlled by the baseband controller 52 via an interface 54. The baseband controller 52 controls the SIM 24 via interface 56.

In the prior art, the mobile device 50 is authenticated at the mobile telecommunication network by using the secret key 44 in a challenge response procedure. Furthermore, the mobile device 50 is identified by the mobile telecommunication network by handing over the IMSI 42 upon receiving an identity request.

In the presently described embodiments, the mobile device 10 is authenticated at the mobile telecommunication network by using the mobile device authentication key 32 instead of the secret key 44. The mobile device authentication key 32 is external to the SIM 24.

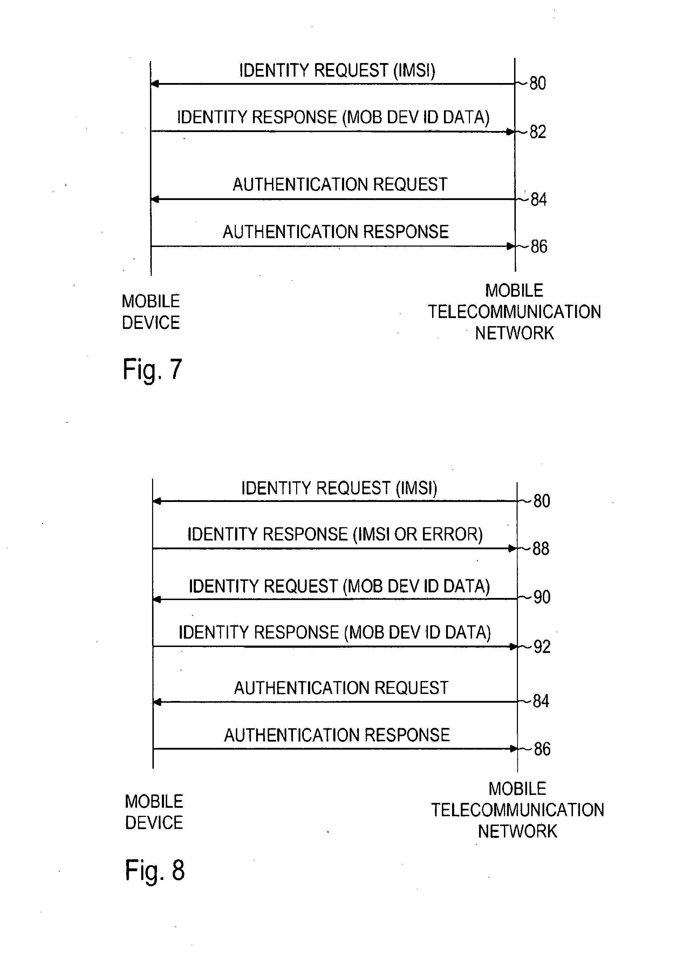

Fig. 7 shows the authentication procedure of a mobile device 10 in the mobile telecommunication network according to a comparative example that is useful for understanding the invention. The mobile device authentication key 32 is stored in the authentication module 20 of the mobile device 10 and is also known to the mobile telecommunication network. The mobile telecommunication network sends an authentication request 84 to the mobile device 10. The authentication request 84 contains a challenge, which is generated from the mobile device authentication key 32. The authentication and identification logic 28 of the authentication module 20 calculates a response based on the received challenge and sends the response in an authentication response 86 to the mobile telecommunication network, which verifies the response.

In some embodiments of the invention, the mobile device authentication key 32 is stored in a memory field of an integrated circuit and is secured to be read from outside of the integrated circuit. This ensures that the mobile device authentication key 32 can be used for accessing the authentication and key generating functions, whereas the key value itself does not leave the integrated circuit.

In another embodiment, the mobile telecommunication network identifies the mobile device 10 by using the mobile device identity data 30, which differs from the IMSI 42.

The comparative example of Fig. 7 shows the identification procedure which proceeds the authentication procedure. The mobile telecommunication network sends an identity request 80 to the mobile device 10. The identity request 80 contains a request for an IMSI. The authentication and identification logic 28 retrieves the mobile device identity 30 and returns the mobile device identity 30 or a value derived thereof in an identity response 82 to the mobile telecommunication network, which treats the returned value as an IMSI. Thus the mobile device identity data 30 replaces the IMSI 42 stored in the SIM 24, which is not retrieved.

Fig. 8 shows the identification procedure according to an embodiment of the present invention. The mobile telecommunication network sends an identity request 80 to the mobile device 10. The identity request 80 contains a request for an IMSI. The authentication and identification logic 28 retrieves the IMSI 42 from the SIM 24 and returns the IMSI 42 in an identity response 88 to the mobile telecommunication network. The mobile telecommunication network determines that the received IMSI 42 is a distinguished IMSI an thus repeats the identification procedure explicitly requesting the mobile device identity data 30: The identity request 90 contains a request for the mobile device identity data 30. The authentication and identification logic 28 retrieves the mobile device identity 30 and returns the mobile device identity 30 or a value derived thereof in an identity response 92 to the mobile telecommunication network.

In some embodiments, the mobile device 10 sends an error message instead of sending an IMSI in the identity response 88 of Fig. 8. In this case, the error message is the trigger for the mobile telecommunication network to repeat the identification procedure with requesting the mobile device identity data 30, as shown in the identity request 90.

This procedure is advantageous, because the secret key 44 is part of the subscriber data 36, which cause costly SIM personalization. Using a key stored external to the SIM 24 avoids SIM personalization, as the mobile device authentication key 32 can be used instead of the secret key 44. The same applies to the IMSI 42, which is also part of the subscriber data 36. Using the mobile device identity data 30 stored external to the SIM 24 avoids SIM personalization, as the mobile device identity data 30 can be used instead of the IMSI 42. Identical SIMs 24 can be used for a plurality of mobile devices 10.

The mobile telecommunication network distinguishes mobile devices 10 according to the present invention by its mobile device identity data 30. In one embodiment, the mobile telecommunication network treats the mobile device identity data 30 as an IMSI, i.e., the mobile device identity data 30 are within specified IMSI ranges.

In another embodiment, the mobile telecommunication network first detects the IMSI of the identifying mobile device 10. If the IMSI is either undefined or denotes a mobile device 10 according to the present invention, then the mobile telecommunication network uses the mobile device identity data 30 as an alternative for subscriber identification.

According to an embodiment of the invention, a plurality of mobile devices 10 does not have an IMSI, which is referred to as undefined IMSI. For example, this may be the case if each of the mobile devices 10 just has a zero value or another value denoting unprogrammed memory cells in its IMSI memory field. In another embodiment, the plurality of mobile devices has a single, identical value as an identical IMSI 42.

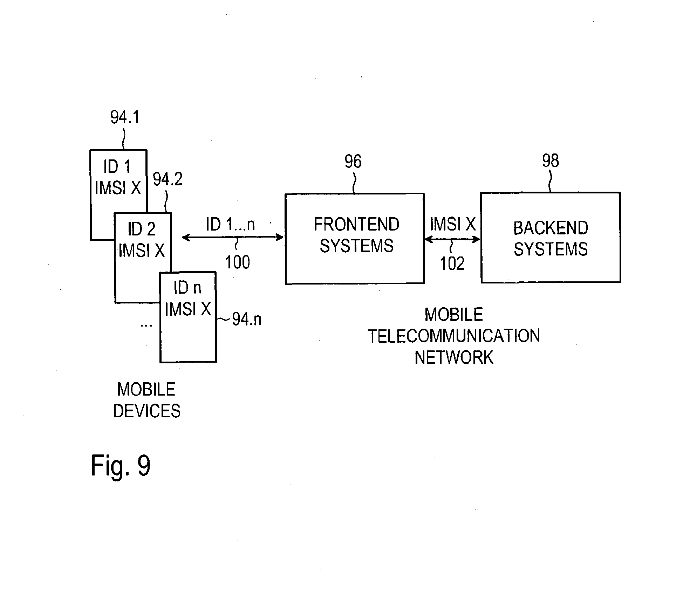

Fig. 9 shows a plurality of mobile devices 94.1, 94.2 etc., in the following referred to as 94.x. The front-end systems 96 in the mobile telecommunication network, e.g. the Home Location Register, communicate with each of the mobile devices 94.x by using the individual mobile device identity data 30, whereas the back-end systems 98 still use the IMSI 42, which is the same for the plurality of mobile devices 94.x.

The activities of all mobile devices 94.x with the identical IMSI 42 are aggregated in the back-end systems 98 of the mobile telecommunication network. Therefore all mobile devices 94.x, which must be billed to one customer, will receive at least one identical IMSI 42. This approach saves capacity in the back-end systems 98, as only one IMSI record is used for a plurality of mobile devices 94.x. The same applies if the back-end systems in the mobile telecommunication network operate on the basis of an MSISDN. In this case, only one MSISDN is assigned to the plurality of mobile devices 94.x.

In case that the network operator does not need to bill the activities of the mobile devices 94.x, there is no need to provision an IMSI or an MSISDN at all. Especially for tracking or emergency devices, a flat fee may be negotiated. In this case, network resources can be saved by avoiding to assign an IMSI and/or an MSISDN to such mobile devices 94.x.

According to an embodiment of the invention, the method steps that are performed by the mobile device 10 are implemented in an integrated circuit. Fig. 5 shows an integrated circuit 60, which comprises the functionality of the baseband controller 16 and the authentication module 20. In various embodiments, an integrated circuit 62 may comprise the baseband controller 16 and the RF signal processor 14.

Fig. 6 shows the integration of both telecommunication and location determining functionality in a single chip. An integrated circuit 64 comprises both telecommunication and location determining functions, thus integrating the baseband controller 16, the authentication module 20, the navigation baseband controller 70, and the telecommunication and location determining controller 74. In other embodiments, the components of integrated circuit 64, the RF signal processor 14, and the navigation RF signal processor 68 are combined in the integrated circuit 66.

In a comparative example that is useful for understanding the invention, a mobile device implements the identification procedure and the authentication procedure as shown in Fig. 7. In an embodiment of the invention, the mobile device implements the identification procedure and the authentication procedure as shown in Fig. 8. In further embodiments, a tracking or emergency device implements the identification and authentication procedures as described before and comprises a location determining module.

The invention can be used in various mobile telecommunication networks which use removable cards or modules for subscriber identification, and where personalization of these removable cards or modules can be avoided by storing individual data in an integrated circuit being different from such removable cards or modules.

The particulars contained in the above description of sample embodiments should not be construed as limitations of the scope of the invention, but rather as exemplifications of some embodiments thereof. Many variations are possible and are immediately apparent to the person skilled in the arts. In particular, this concerns variations that comprise a combination of features of the individual embodiments disclosed in the present specification.

## Claims

1. A method executed in a mobile telecommunication network for identifying a plurality of mobile devices (94.1, 94.2, 94.n) in the mobile telecommunication network, wherein
each mobile device of the plurality of mobile devices (94.1, 94.2, 94.n) has an identical IMSI (102) or an undefined IMSI (102), and wherein
each mobile device of the plurality of mobile devices (94.1, 94.2, 94.n) comprises unique mobile device identity data (30) and a mobile device authentication key (32) stored external to a respective SIM (24) of the mobile device (94.1, 94.2, 94.n),
the method comprising:
sending a first identity request (80) to the mobile device (94.1, 94.2, 94.n) requesting an IMSI (102),
receiving a first identity response (88) from the mobile device (94.1, 94.2, 94.n),
determining that the first identity response (88) comprises data that denotes the identical IMSI (102) or the undefined IMSI (102),
sending a second identity request (90) to the mobile device (94.1, 94.2, 94.n) requesting the mobile device identity data (30),
receiving a second identity response (92) from the mobile device (94.1, 94.2, 94.n), the second identity response (92) identifying the mobile device (94.1, 94.2, 94.n) based on the mobile device identity data (30),
sending an authentication request (84) with a challenge to the mobile device (94.1, 94.2, 94.n), and
receiving an authentication response (86) from the mobile device (94.1, 94.2, 94.n), wherein the authentication response (86) is generated by the mobile device (94.1, 94.2, 94.n) based on the challenge and the mobile device authentication key (32).

2. The method of claim 1, wherein
the respective mobile device authentication key (32) of each mobile device (94.1, 94.2, 94.n) is stored in a memory field of an integrated circuit (60, 62, 64, 66) of the mobile device (94.1, 94.2, 94.n), and wherein
the respective mobile device authentication key (32) is secured so that its value cannot be read from outside of the integrated circuit (60, 62, 64, 66) of the mobile device (94.1, 94.2, 94.n).

3. The method of claim 1 or claim 2, wherein
each mobile device of the plurality of mobile devices (94.1, 94.2, 94.n) does not have an MSISDN.

4. The method of claim 1 or claim 2, wherein
each mobile device of the plurality of mobile devices (94.1, 94.2, 94.n) has an identical MSISDN, and wherein
the mobile telecommunication network addresses the plurality of mobile devices (94.1, 94.2, 94.n) by the identical IMSI (102) or by the identical MSISDN to aggregate the activities of the plurality of mobile devices (94.1, 94.2, 94.n) to a single entity represented by the identical IMSI (102) or the identical MSISDN.

5. The method of any one of claims 1 - 4, wherein
the mobile telecommunication network is a GSM network, and wherein
each mobile device (94.1, 94.2, 94.n) is a mobile station.

6. The method of claim 5, wherein the mobile telecommunication network supports GPRS or EDGE.

7. The method of any one of claims 1 - 4, wherein
the mobile telecommunication network is a 3G network, wherein
each mobile device (94.1, 94.2, 94.n) is a user equipment, and
each SIM (24) is a UICC.

8. The method of claim 7, wherein the mobile telecommunication network supports HSDPA or HSUPA.

9. The method of any one of claims 1 - 8, wherein the mobile device authentication key (32) of each mobile device (94.1, 94.2, 94.n) is an individual mobile device authentication key (32).

10. A system, comprising a mobile telecommunication network and a plurality of mobile devices (94.1, 94.2, 94.n), each mobile device comprising a SIM (24), wherein each SIM (24) of the plurality of mobile devices (94.1, 94.2, 94.n) comprises an identical IMSI (102) or an undefined IMSI (102), and wherein the mobile telecommunication network is configured for performing the method of any one of claims 1 - 9.

11. The system of claim 10, wherein each of the plurality of mobile devices (94.1, 94.2, 94.n) comprises an integrated circuit (60, 62, 64, 66), the integrated circuit (60, 62, 64, 66) comprising a location determining section that is configured for receiving radio frequency signals from a satellite navigation system, wherein the integrated circuit (60, 62, 64, 66) is configured for sending location information obtained by the location determining section to the mobile telecommunication network.

12. The system of claim 11, wherein
the satellite navigation system is GPS, and wherein
the location determining section comprises a GPS receiver.

13. The system of any of claims 10 - 12, wherein the SIM (24) of each of the plurality of mobile devices (94.1, 94.2, 94.n) is a non-personalized SIM (24).

14. The system of any of claims 10 - 13, wherein each of the plurality of mobile devices (94.1, 94.2, 94.n) is a tracking device or an emergency device.

15. A machine-readable medium that comprises a plurality of program instructions, wherein the program instructions are adapted for causing at least one processor to perform the method of any one of claims 1 - 9.

## Patentansprüche

1. Verfahren, das in einem Mobiltelekommunikationsnetzwerk ausgeführt wird, um eine Mehrzahl von Mobilgeräten (94.1, 94.2, 94.n) in dem Mobiltelekommunikationsnetzwerk zu identifizieren, wobei
jedes Mobilgerät der Mehrzahl von Mobilgeräten (94.1, 94.2, 94.n) eine gleiche IMSI (102) oder eine undefinierte IMSI (102) aufweist, und wobei
jedes Mobilgerät der Mehrzahl von Mobilgeräten (94.1, 94.2, 94.n) eindeutige Mobilgeräts-Identitätsdaten (30) und einen Mobilgeräts-Authentisierungsschlüssel (32) aufweist, die außerhalb eines jeweiligen SIM (24) des Mobilgeräts (94.1, 94.2, 94.n) gespeichert sind,
wobei das Verfahren umfasst:
Senden einer ersten Identitätsanfrage (80), die eine IMSI (102) anfordert, an das Mobilgerät (94.1, 94.2, 94.n),
Empfangen einer ersten Identitätsantwort (88) von dem Mobilgerät (94.1, 94.2, 94.n),
Bestimmen, dass die erste Identitätsantwort (88) Daten enthält, die die gleiche IMSI (102) oder die undefinierte IMSI (102) bezeichnen,
Senden einer zweiten Identitätsanfrage (90), die die Mobilgeräts-Identitätsdaten (30) anfordert, an das Mobilgerät (94.1, 94.2, 94.n),
Empfangen einer zweiten Identitätsantwort (92) von dem Mobilgerät (94.1, 94.2, 94.n), wobei die zweite Identitätsantwort (92) das Mobilgerät (94.1, 94.2, 94.n) beruhend auf den Mobilgeräts-Identitätsdaten (30) identifiziert,
Senden einer Authentisierungsanfrage (84) mit einer Aufgabe an das Mobilgerät (94.1, 94.2, 94.n), und
Empfangen einer Authentisierungsantwort (86) von dem Mobilgerät (94.1, 94.2, 94.n), wobei die Authentisierungsantwort (86) durch das Mobilgerät (94.1, 94.2, 94.n) beruhend auf der Aufgabe und dem Mobilgeräts-Authentisierungsschlüssel (32) erzeugt wird.

2. Verfahren nach Anspruch 1, wobei
der jeweilige Mobilgeräts-Authentisierungsschlüssel (32) jedes Mobilgeräts (94.1, 94.2, 94.n) in einem Speicherfeld einer integrierten Schaltung (60, 62, 64, 66) des Mobilgeräts (94.1, 94.2, 94.n) gespeichert ist, und wobei
der jeweilige Mobilgeräts-Authentisierungsschlüssel (32) derart gesichert ist, dass sein Wert nicht von außerhalb der integrierten Schaltung (60, 62, 64, 66) des Mobilgeräts (94.1, 94.2, 94.n) ausgelesen werden kann.

3. Verfahren nach Anspruch 1 oder Anspruch 2, wobei
jedes Mobilgerät der Mehrzahl von Mobilgeräten (94.1, 94.2, 94.n) keine MSISDN aufweist.

4. Verfahren nach Anspruch 1 oder Anspruch 2, wobei
jedes Mobilgerät der Mehrzahl von Mobilgeräten (94.1, 94.2, 94.n) eine gleiche MSISDN aufweist, und wobei
das Mobiltelekommunikationsnetzwerk die Mehrzahl von Mobilgeräten (94.1, 94.2, 94.n) durch die gleiche IMSI (102) oder durch die gleiche MSISDN anspricht, um die Aktivitäten der Mehrzahl von Mobilgeräten (94.1, 94.2, 94.n) zu einer einzigen Einheit zusammenzufassen, die durch die gleiche IMSI (102) oder die gleiche MSISDN dargestellt wird.

5. Verfahren nach einem der Ansprüche 1 - 4, wobei
das Mobiltelekommunikationsnetzwerk ein GSM-Netzwerk ist, und wobei
jedes Mobilgerät (94.1, 94.2, 94.n) ein Mobilfunkendgerät ist.

6. Verfahren nach Anspruch 5, wobei das Mobiltelekommunikationsnetzwerk GPRS oder EDGE unterstützt.

7. Verfahren nach einem der Ansprüche 1 - 4, wobei
das Mobiltelekommunikationsnetzwerk ein 3G-Netzwerk ist, wobei jedes Mobilgerät (94.1, 94.2, 94.n) eine Benutzereinrichtung ist, und jedes SIM (24) eine UICC ist.

8. Verfahren nach Anspruch 7, wobei das Mobiltelekommunikationsnetzwerk HSDPA oder HSUPA unterstützt.

9. Verfahren nach einem der Ansprüche 1 - 8, wobei der Mobilgeräts-Authentisierungsschlüssel (32) jedes Mobilgeräts (94.1, 94.2, 94.n) ein individueller Mobilgeräts-Authentisierungsschlüssel (32) ist.

10. System, das ein Mobiltelekommunikationsnetz und eine Mehrzahl von Mobilgeräten (94.1, 94.2, 94.n) aufweist, wobei jedes Mobilgerät ein SIM (24) aufweist, wobei jedes SIM (24) der Mehrzahl von Mobilgeräten (94.1, 94.2, 94.n) eine gleiche IMSI (102) oder eine undefinierte IMSI (102) aufweist, und wobei das Mobiltelekommunikationsnetzwerk dazu eingerichtet ist, das Verfahren nach einem der Ansprüche 1 - 9 auszuführen.

11. System nach Anspruch 10, bei dem jedes der Mehrzahl von Mobilgeräten (94.1, 94.2, 94.n) eine integrierte Schaltung (60, 62, 64, 66) aufweist, wobei die integrierte Schaltung (60, 62, 64, 66) einen Ortsbestimmungsteil aufweist, der zum Empfangen von Funksignalen von einem Satellitennavigationssystem eingerichtet ist, wobei die integrierte Schaltung (60, 62, 64, 66) dazu eingerichtet ist, Ortsinformationen, die von dem Ortsbestimmungsteil ermittelt worden sind, an das Mobiltelekommunikationsnetzwerk zu senden.

12. System nach Anspruch 11, bei dem
das Satellitennavigationssystem GPS ist, und bei dem
der Ortsbestimmungsteil einen GPS-Empfänger aufweist.

13. System nach einem der Ansprüche 10 - 12, bei dem das SIM (24) jedes der Mehrzahl von Mobilgeräten (94.1, 94.2, 94.n) ein nicht-personalisiertes SIM (24) ist.

14. System nach einem der Ansprüche 10 - 13, bei dem jedes der Mehrzahl von Mobilgeräten (94.1, 94.2, 94.n) ein Nachverfolgungsgerät oder ein Notfallgerät ist.

15. Maschinenlesbares Medium, das eine Vielzahl von Programmbefehlen aufweist, wobei die Programmbefehle dazu eingerichtet sind, mindestens einen Prozessor dazu zu veranlassen, das Verfahren nach einem der Ansprüche 1 - 9 auszuführen.

## Revendications

1. Procédé exécuté dans un réseau de télécommunication mobile afin d'identifier une pluralité d'appareils mobiles (94.1, 94.2, 94.n) dans le réseau de télécommunication mobile, dans lequel
chaque appareil mobile de la pluralité d'appareils mobiles (94.1, 94.2, 94.n) possède une identité IMSI (102) identique ou une identité IMSI (102) indéfinie et dans lequel
chaque appareil mobile de la pluralité d'appareils mobiles (94.1, 94.2, 94.n) comprend des données (30) uniques d'identité de l'appareil mobile et une clé (32) d'authentification d'appareil mobile stockées à l'extérieur d'une carte SIM (24) respective de l'appareil mobile (94.1, 94.2, 94.n),
le procédé comprenant :
l'envoi d'une première demande d'identité (80) à l'appareil mobile (94.1, 94.2, 94.n) demandant une identité IMSI (102),
la réception d'une première réponse sur l'identité (88) provenant de l'appareil mobile (94.1, 94.2, 94.n),
la détermination de ce que la première réponse sur l'identité (88) comprend des données qui indiquent l'identité IMSI (102) identique ou l'identité IMSI (102) indéfinie,
l'envoi d'une seconde demande d'identité (90) à l'appareil mobile (94.1, 94.2, 94.n) demandant les données sur l'identité de l'appareil mobile (30),
la réception d'une seconde réponse sur l'identité (92) provenant de l'appareil mobile (94.1, 94.2, 94.n), la seconde réponse sur l'identité (92) identifiant l'appareil mobile (94.1, 94.2, 94.n) sur la base des données d'identité de l'appareil mobile (30),
l'envoi d'une demande d'authentification (84) avec une intervention sur l'appareil mobile (94.1, 94.2, 94.n), et
la réception d'une réponse d'authentification (86) provenant de l'appareil mobile (94.1, 94.2, 94.n), la réponse d'authentification (86) étant générée par l'appareil mobile (94.1, 94.2, 94.n) sur la base de l'intervention et de la clé d'authentification (32) de l'appareil mobile.

2. Procédé selon la revendication 1, dans lequel
la clé respective d'authentification (32) de l'appareil mobile appartenant à chaque appareil mobile (94.1, 94.2, 94.n) est stockée dans un champ de mémoire d'un circuit intégré (60, 62, 64, 66) de l'appareil mobile (94.1, 94.2, 94.n), et
la clé respective d'authentification (32) de l'appareil mobile est protégée de telle sorte que sa valeur ne peut pas être lue de l'extérieur du circuit intégré (60, 62, 64, 66) de l'appareil mobile (94.1, 94.2, 94.n).

3. Procédé selon la revendication 1 ou la revendication 2, dans lequel
chaque appareil mobile de la pluralité d'appareils mobiles (94.1, 94.2, 94.n) n'a pas de numéro MSISDN.

4. Procédé selon la revendication 1 ou la revendication 2, dans lequel
chaque appareil mobile de la pluralité d'appareils mobiles (94.1, 94.2, 94.n) possède un numéro MSISDN identique et dans lequel
le réseau de télécommunication mobile traite la pluralité d'appareils mobiles (94.1, 94.2, 94.n) grâce à l'identité IMSI (102) identique ou grâce au numéro MSISDN identique afin de regrouper les activités de la pluralité d'appareils mobiles (94.1, 94.2, 94.n) en une entité unique représentée par l'identité IMSI (102) identique ou le numéro MSISDN identique.

5. Procédé selon l'une quelconque des revendications 1 à 4, dans lequel
le réseau de télécommunication mobile est un réseau au standard GSM et dans lequel
chaque appareil mobile (94.1, 94.2, 94.n) représente une station mobile.

6. Procédé selon la revendication 5, dans lequel le réseau de télécommunication mobile prend en charge les standards GPRS ou EDGE.

7. Procédé selon l'une quelconque des revendications 1 à 4, dans lequel
le réseau de télécommunication mobile est un réseau de type 3G dans lequel
chaque appareil mobile (94.1, 94.2, 94.n) est un équipement utilisateur, et chaque carte SIM (24) est une carte universelle UICC.

8. Procédé selon la revendication 7, dans lequel le réseau de télécommunication mobile prend en charge les standards HSDPA ou HSUPA.

9. Procédé selon l'une quelconque des revendications 1 à 8, dans lequel la clé d'authentification (32) d'appareil mobile appartenant à chaque appareil mobile (94.1, 94.2, 94.n) est une clé individuelle d'authentification (32) d'appareil mobile.

10. Système, comprenant un réseau de télécommunication mobile et une pluralité d'appareils mobiles (94.1, 94.2, 94.n), chaque appareil mobile comprenant une carte SIM (24), chaque carte SIM (24) de la pluralité d'appareils mobiles (94.1, 94.2, 94.n) comprenant une identité IMSI (102) identique ou une identité IMSI (102) indéfinie, et le réseau de télécommunication mobile étant configuré pour exécuter le procédé conforme à l'une quelconque des revendications 1 à 9.

11. Système selon la revendication 10, dans lequel chacun de la pluralité d'appareils mobiles (94.1, 94.2, 94.n) comprend un circuit intégré (60, 62, 64, 66), le circuit intégré (60, 62, 64, 66) comprenant une section de détermination d'emplacement qui est configurée pour recevoir des signaux radio fréquence provenant d'un système de navigation par satellite, le circuit intégré (60, 62, 64, 66) étant configuré pour envoyer les informations de localisation obtenues par la section de détermination d'emplacement vers le réseau de télécommunication mobile.

12. Système selon la revendication 11, dans lequel
le système de navigation par satellite est au standard GPS, et dans lequel
la section de détermination d'emplacement comprend un récepteur au standard GPS.

13. Système selon l'une quelconque des revendications 10 à 12, dans lequel la carte SIM (24) de chacun de la pluralité d'appareils mobiles (94.1, 94.2, 94.n) est une carte SIM (24) non personnalisée.

14. Système selon l'une quelconque des revendications 10 à 13, dans lequel chacun de la pluralité d'appareils mobiles (94.1, 94.2, 94.n) est un appareil de poursuite ou un appareil d'urgence.

15. Support pouvant être lu par une machine qui comprend une pluralité d'instructions de programme, les instructions de programme étant conçues pour amener au moins un processeur à exécuter le procédé conforme à l'une quelconque des revendications 1 à 9.
